# EUROPEAN PATENT SPECIFICATION

(11) **EP 2 905 321 B1**
(45) Date of publication and mention of the grant of the patent: **15.05.2019**
(21) Application number: 15154015.0
(22) Date of filing: 05.02.2015
(51) Int. Cl.: C09K 11/02, C09K 11/70, C09K 11/63

(54) **Semiconductor nanocrystal particles and processes for synthesizing the same**
Halbleiternanokristallpartikel und Verfahren zur Synthetisierung davon
Particules de nanocristal semi-conducteur et procédés permettant de les synthétiser

(30) Priority: 05.02.2014 KR 20140013240; 03.02.2015 KR 20150016823
(43) Date of publication of application: 12.08.2015
(73) Proprietor: Samsung Electronics Co., Ltd., Gyeonggi-do 443-742 (KR)
(72) Inventor: Jun, Shin Ae, Gyeonggi-do (KR); Jang, Hyo Sook, Gyeonggi-do (KR); Won, Yuho, Seoul (KR); Jang, Eun Joo, Gyeonggi-do (KR)
(74) Representative: Elkington and Fife LLP

(56) References cited:
- WO-A2-2005/022120
- US-A1- 2005 267 345
- US-A1- 2006 054 863
- US-A1- 2010 044 678

## Description

### FIELD OF THE INVENTION

A semiconductor nanocrystal particle, a production method thereof, and a device including the same are disclosed.

### BACKGROUND OF THE INVENTION

Unlike bulk materials, nanocrystals have unique physical characteristics (e.g., energy bandgap and melting point) that are a function of their particle size. For example, a semiconductor nanocrystal (also known as a quantum dot) is a semiconductor material having a crystalline structure and a size of several nanometers. The semiconductor nanocrystal has a very small size and a large surface area per unit volume, and may exhibit a quantum confinement effect. Therefore, the semiconductor nanocrystal has different physicochemical characteristics from that of a bulk material having the same composition. For example, quantum dots may have an energy bandgap selected by adjusting the size and the composition thereof, and thus may emit high purity light at various wavelengths. Accordingly, quantum dots may find their utility in different fields of displays, energy devices, semiconductors, and biological applications, and thus they have drawn much attention.

The semiconductor nanocrystal may be synthesized by a vapor deposition method, such as metal organic chemical vapor deposition ("MOCVD") or molecular beam epitaxy ("MBE"), or by a wet chemical method of adding a precursor to an organic solvent to grow crystals. In the wet chemical method, organic materials such as a dispersant are coordinated to a surface of the semiconductor crystal during the crystal growth to control the crystal growth. Therefore, the nanocrystals produced by the wet chemical method usually have a more uniform size and shape than those produced by the vapor deposition method.

Nanocrystal particles may exhibit an enhanced light emitting efficiency, nonetheless there remains a need to provide improved quantum yield to provide improved light emitting efficiency.

US 2006/054863 discloses a composite scintillator for detecting ionizing radiation comprising a material having optical transparency wherein said material comprises nano-sized objects having a size in at least one dimension that is less than the wavelength of light emitted by the composite scintillator wherein the composite scintillator is designed to have selected properties suitable for a particular application.

US 2010/044678 discloses method of placing a functionalized semiconducting nanostructure, includes functionalizing a semiconducting nanostructure including one of a nanowire and a nanocrystal, with an organic functionality including a functional group for bonding to a bonding surface, dispersing the functionalized semiconducting nanostructure in a solvent to form a dispersion, and depositing the dispersion onto the bonding surface.

### SUMMARY OF THE INVENTION

An embodiment provides a nanocrystal particle having enhanced light emitting properties, such as a higher quantum yield and a lower value of a full width at half maximum (hereinafter, also referred to as "FWHM").

Another embodiment provides a process of preparing the nanocrystal particle having enhanced light emitting properties at an increased yield.

In an embodiment, a nanocrystal particle includes a semiconductor material; boron and fluorine, wherein the particle has an organic ligand bound to a surface thereof, the boron is present as being doped in the particle or as a metal boride and the fluorine is present as being doped in the particle or as a metal fluoride.

The semiconductor material includes a Group II-VI compound, a Group III-V compound, a Group IV-VI compound, or a combination thereof, wherein the Group II-VI compound comprises a Group II metal selected from the group consisting of Zn, Hg, and Mg and a Group VI element, and wherein the Group III-V compound comprises a Group III metal selected from the group consisting of Al, In, Ga, and Tl and a Group V element, and wherein the Group IV-VI compound comprises a Group IV element selected from the group consisting of Si, Ge, and Sn, and a Group VI element.

The nanocrystal particle does not include cadmium.

The Group II-VI compound may comprise at least one selected from the group consisting of ZnS, ZnSe, ZnTe, ZnO, HgS, HgSe, HgTe, MgSe, MgS, ZnSeS, ZnSeTe, ZnSTe, HgSeS, HgSeTe, HgSTe, HgZnS, HgZnSe, HgZnTe, MgZnSe, MgZnS, HgZnTeS, HgZnSeS, HgZnSeTe, HgZnSTe, and a combination thereof.

The Group III-V compound may comprise at least one selected from the group consisting of GaN, GaP, GaAs, GaSb, AIN, AIP, AlAs, AlSb, InN, InP, InAs, InSb, GaNP, GaNAs, GaNSb, GaPAs, GaPSb, AINP, AINAs, AINSb, AlPAs, AlPSb, InNP, InNAs, InNSb, InPAs, InPSb, GaAINP, GaAINAs, GaAINSb, GaAlPAs, GaAlPSb, GaInNP, GaInNAs, GaInNSb, GaInPAs, GaInPSb, InAINP, InAINAs, InAINSb, InAIPAs, InAIPSb, and a combination thereof.

The Group IV-VI compound may comprise at least one selected from the group consisting of SnS, SnSe, SnTe, PbS, PbSe, PbTe, SnPbSSe, SnPbSeTe, SnPbSTe, and a combination thereof

The nanocrystal particle may have a core including a first nanocrystal and a shell surrounding the core, the shell including a crystalline or an amorphous material.

The first nanocrystal may include a Group II-VI compound, a Group III-V compound, a Group IV-VI compound, or a combination thereof.

The crystalline or amorphous material may have a same or a different composition than that of the first nanocrystal, and may include a Group II-VI compound, a Group III-V compound, a Group IV-VI compound, a metal fluoride, a metal oxide, or a combination thereof, and may have a bandgap which is greater than a bandgap of the first nanocrystal.

The boron, the fluorine, or both may be included in the core, in an interface between the core and the shell, in the shell, or a combination thereof.

The boron and the fluorine may be present in the same region or in different regions from each other.

The shell may be a multi-layered shell having at least two layers, each of the layers including the same or different materials, each of which may be crystalline or amorphous, and the boron, the fluorine, or the both may be present in the core, in an inner shell (i.e., an inner layer of the shell), in an outer shell (i.e., an outer layer of the shell which is on the inner layer), in an interface between the core and the shell, in an interface between the layers of the shells, or a combination thereof. The boron may be present in all of the aforementioned regions. The fluorine may be present in all of the aforementioned regions.

The organic ligand may include a compound of the formula RCOOH, RNH₂, R₂NH, R₃N, RSH, RH₂PO, R₂HPO, R₃PO, RH₂P, R₂HP, R₃P, ROH, RCOOR', RPO(OH)₂, or R₂POOH, wherein R and R' are each independently a C1 to C24 alkyl group, a C2 to C24 alkenyl group, or a C6 to C20 aryl group, or a combination thereof.

The amount of the boron may range from about 0.1 mole percent (mol%) to about 50 mol%, based on a total moles of all elements included in the nanocrystal particle.

The nanocrystal particle includes boron and fluorine, and the amount of the boron may range from about 0.1 mol% to about 30 mol%, based on a total moles of all elements included in the particle.

The amount of the fluorine may range from 0 mol% to about 30 mol%, based on a total moles of all elements included in the particle.

The particle includes boron and fluorine, and the mole ratio between the boron and the fluorine (i.e., boron:fluorine) may be about 1:100 to about 1:0.1.

A plurality of the nanocrystal particles may exhibit a quantum yield of greater than or equal to about 65 percent (%) and have a standard deviation of a particle size of less than or equal to about 20 %.

In another embodiment, a process of synthesizing the above nanocrystal particles includes:
obtaining a first mixture including a first precursor, a ligand compound, and a solvent;
optionally heating the first mixture;
adding a boron source, a second precursor, a first nanocrystal and a fluorine source to the optionally heated first mixture to obtain a second mixture; and
heating the second mixture to a reaction temperature to form a reaction product of the first precursor and the second precursor, wherein the reaction product is a nanocrystal particle including a semiconductor material, boron, and fluorine, wherein the nanocrystal particle has the ligand compound bound to a surface thereof and the boron and the fluorine is present as being doped in the particle or as a metal boride or a metal fluoride.

In the above process, the first precursor may be two or more different compounds and/or the second precursor may be two or more different compounds. The two or more different compounds for the first precursor may be added in any suitable order or in the form of a mixture, for example, with a ligand compound and/or a solvent. The two or more different compounds for the second precursor may be added in any suitable order or in the form of a mixture, for example, with a ligand compound and/or a solvent.

The first precursor may include a Group II metal, a Group III metal, or a Group IV metal, and may include an elemental metal (e.g. a metal powder), an alkylated metal compound, a metal alkoxide, a metal carboxylate, a metal nitrate, a metal perchlorate, a metal sulfate, a metal acetylacetonate, a metal halide, a metal cyanide, a metal hydroxide, a metal oxide, a metal peroxide,
or a combination thereof.

The ligand compound may include a compound of the formula RCOOH, RNH₂, R₂NH, R₃N, RSH, RH₂PO, R₂HPO, R₃PO, RH₂P, R₂HP, R₃P, ROH, RCOOR', RPO(OH)₂, or R₂POOH, wherein R and R' are each independently a C1 to C24 alkyl group, a C2 to C24 alkenyl group, or a C6 to C20 aryl group, or a combination thereof.

A mole ratio between the first precursor and the ligand may be about 1:4 to about 1:0.5.

The solvent may include a C6 to C22 primary amine, a C6 to C22 secondary amine, C6 to C40 tertiary amine, a heterocyclic compound having a nitrogen atom, a C6 to C40 olefin, a C6 to C40 aliphatic hydrocarbon, a C6 to C30 aromatic hydrocarbon substituted with a C1 to C20 alkyl group, a primary, secondary, or tertiary phosphine having at least one C6 to C22 alkyl group, a primary, secondary, or tertiary phosphine oxide having at least one C6 to C22 alkyl group, a C12 to C22 aromatic ether, or a combination thereof.

The second precursor may be a Group V elemental metal, a compound including a Group V element, a Group VI elemental metal, a compound including a Group VI element, or a combination thereof.

The boron source may be a complex of borane (i.e., BH₃) with a substance having a lone pair of electrons.

The compound having a lone pair of electrons may include a C1 to C16 amine, a C2 to C16 ether, a C3 to C16 carbonyl containing compound, tetrahydrofuran, a C2 to C16 alkyl sulfide such as diethyl sulfide or dimethyl sulfide, a C7 to C20 arylmethyl sulfide, allylmethyl sulfide, tetrahydrothiophene, pyridine, PF₃, H⁻, or a combination thereof.

The fluorine source may include HF, NH₄F, LiF, NaF, KF, BeF₂, MgF₂, CaF₂, SrF₂, CuF, CuF₂, AgF, AuF, AuF₃, ZnF₂, CdF₂, HgF₂, AlF₃, GaF₃, InF₃, SnF₂, PbF₂, BF₃, HBF₄, a BF₄⁻-containing salt, a PF₆⁻-containing salt, B(Ar)₃ wherein Ar is a fluorine substituted C6 to C20 aromatic hydrocarbon, or a combination thereof.

The boron source and the fluorine source may include a single compound having boron and fluorine.

The single compound having boron and fluorine may include BF₃, HBF₄, NaBF₄, NH₄BF₄, alkylammonium tetrafluoroborate, an ionic liquid, or a combination thereof.

The boron source and the fluorine source may be added to the first mixture in an amount of 0.5 mole percent (mol%) to about 500 mol%, based on the total moles of the first metal precursor, respectively.

The fluorine source may be dissolved in a carrier solvent and added as a solution, and the carrier solvent may include water, a ketone such as acetone, a primary amine, a secondary amine, a tertiary amine, a heterocyclic compound having a nitrogen atom, a C6 to C40 olefin, a C6 to C40 aliphatic hydrocarbon, a C6 to C30 aromatic hydrocarbon substituted with a C1 to C20 alkyl group, a primary, secondary, or tertiary phosphine substituted with a C6 to C22 alkyl group, a primary, secondary, or tertiary phosphine oxide substituted with a C6 to C22 alkyl group, an aromatic ether, or a combination thereof.

The solution may include the fluorine source in an amount of greater than or equal to about 0.001 moles per liter (mol/L).

In another embodiment, a device may include the aforementioned nanocrystal particle.

The device may be a light emitting diode ("LED"), an organic light emitting diode ("OLED"), a sensor, a solar cell device, or a liquid crystal display ("LCD").

The nanocrystal particle may exhibit significantly enhanced light emitting properties. According to the aforementioned methods, it is possible to increase reproducibility and yield of the nanocrystal particle preparation.

### BRIEF DESCRIPTION OF THE DRAWINGS

These and/or other aspects will become apparent and more readily appreciated from the following description of the embodiments, taken in conjunction with the accompanying drawings, in which:
FIG. 1A is a graph of absorption (arbitrary units) versus wavelength (nanometers, nm) and shows an ultraviolet ("UV") absorption spectrum of the nanocrystal particles synthesized in Example 1;
FIG. 1B is a graph of photoluminescence (arbitrary units) versus wavelength (nanometers, nm) and shows a photoluminescence ("PL") spectrum of the nanocrystal particles synthesized in Example 1;
FIG. 2 is graph of intensity (arbitrary units, a.u.) versus binding energy (electron volts, eV) illustrating the results of an X-ray photoelectron spectroscopy analysis of the nanocrystal particles synthesized in Example 1 and Reference Example 3;
FIG. 3 is a TEM image of nanocrystal particles synthesized in Example 1;
FIG. 4 is a TEM image of nanocrystal particles synthesized in Example 2;
FIG. 5 is a TEM image of nanocrystal particles synthesized in Reference Example 3;
FIG. 6 is a TEM image of nanocrystal particles synthesized in Comparative Example 1; and
FIG. 7 is a TEM image of nanocrystal particles synthesized in Comparative Example 2.
FIG. 8 is a view showing the results of an X-ray diffraction (XRD) analysis for the nanocrystal particles synthesized in Example 1.

### DETAILED DESCRIPTION OF THE EMBODIMENTS

This disclosure will be described more fully hereinafter in the following detailed description, in which some but not all embodiments of this disclosure are described. This disclosure may be embodied in many different forms and is not be construed as limited to the embodiments set forth herein; rather, these embodiments are provided so that this disclosure will fully convey the scope of the invention to those skilled in the art. Thus, in some exemplary embodiments, well-known technologies are not specifically explained to avoid ambiguous understanding. Unless otherwise defined, all terms used in the specification (including technical and scientific terms) may be used with meanings commonly understood by a person having ordinary knowledge in the art. Further, unless explicitly defined to the contrary, the terms defined in a generally-used dictionary are not ideally or excessively interpreted. In addition, unless explicitly described to the contrary, the word "comprise" and variations such as "comprises" or "comprising" will be understood to imply the inclusion of stated elements but not the exclusion of any other elements.

Unless specifically described to the contrary, a singular form includes a plural form.

As used herein, the term "and/or" includes any and all combinations of one or more of the associated listed items. "Or" means "and/or." Expressions such as "at least one of," when preceding a list of elements, modify the entire list of elements and do not modify the individual elements of the list.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

The terminology used herein is only for the purpose of describing particular embodiments and is not intended to be limiting. As used herein, the singular forms "a," "an," and "the" are intended to include the plural forms as well, unless the context clearly indicates otherwise. Unless specified otherwise, the term "or" means "and/or."

As used herein, the term "nanocrystal particle" refers to a nano-sized particle including a crystalline material.

As used herein, the term "metal" includes a metal and a metalloid. As used herein, the term "quantum efficiency" and "light emitting efficiency" are equivalent and may be used interchangeably.

"Alkyl" as used herein means a straight or branched chain, saturated, monovalent hydrocarbon group (e.g., methyl or hexyl).

"Alkenyl" means a straight or branched chain, monovalent hydrocarbon group having at least one carbon-carbon double bond (e.g., ethenyl (-HC=CH₂)).

"Aryl" means a monovalent group formed by the removal of one hydrogen atom from one or more rings of an arene (e.g., phenyl or napthyl).

"Alkyne" means a straight or branched chain hydrocarbon having at least one carbon-carbon triple bond.

"Group" means a group of the Periodic Table of the Elements.

As used herein, the term "Group II" may include Group IIA and Group IIB, and examples of the Group II metal include Cd, Zn, Hg and Mg, but are not limited thereto.

As used herein, the term "Group III" may include Group IIIA and Group IIIB, and examples of the Group III metal include, but are not limited to, Al, In, Ga, and Tl.

As used herein, the term "Group IV" may include Group IVA and Group IVB, and examples of the Group IV metal may include, but are not limited to, Si, Ge, and Sn.

As used herein, the term "Group V" may include Group VA, and examples of the Group V element may include, but are not limited to, N, P, As, Sb.

As used herein, the term "Group VI" may include Group VIA, and examples of the Group VI element may include, but are not limited to, S, Se, Te.

As used herein, the term "being doped" and "being set (wedged) between crystal structures" refers to the case where a semiconductor nanocrystal includes a dopant without any substantial changes in its crystalline structure. For example, a dopant element (e.g., boron or fluorine) may be substituted in the crystalline structure or be present as an interstitial atom. The dopant element may not show any substantial crystalline peak and may be detected X ray photoelectron spectroscopy (XPS), energy dispersive X ray spectroscopy (EDX), or Inductively Coupled Plasma - Atomic Emission Spectroscopy (ICP-AES) analysis.

The nanocrystal particle includes a semiconductor material, and boron and fluorine. The nanocrystal particle may include an organic ligand on its surface. The boron may be present as being doped in the particle (e.g., in the crystal structure) or as a metal compound such as metal boride. The fluorine may be present as being doped in the particle (e.g., in the crystal structure) or as a metal compound such as metal fluoride. The boron (and optionally the fluorine) may be substituted in the crystalline structure, be set (wedged) between a crystal structure, or be present as an interstitial atom. In an embodiment, an XRD spectrum of the nanocrystal particle does not include a crystalline peak due to the presence of the boron and the fluorine. The boron and the fluorine may be detected by X ray photoelectron spectroscopy (XPS), energy dispersive X ray spectroscopy (EDX), or Inductively Coupled Plasma - Atomic Emission Spectroscopy (ICP-AES) analysis

The semiconductor material may include a Group II-VI compound, a Group III-V compound, a Group IV-VI compound, a Group IV compound, or a combination thereof. The nanocrystal particle may have a core-shell structure wherein a core comprises a first nanocrystal and a shell surrounds (e.g., is disposed on at least a portion of a surface of or is on an entire surface of) the core. The core and the shell may each independently comprise a crystalline or an amorphous material. The shell may be a multi-layered shell having at least two layers, each of the layers including the same or different crystalline or amorphous materials. In an embodiment the shell is disposed on an entire surface of the core. In an embodiment the shell comprises a crystalline material. In yet another embodiment, the shell comprises a first layer and a second layer, and each of the first layer and the second layer may be crystalline.

In some embodiments, the core may include a first semiconductor material. The shell may include a second semiconductor material that is disposed (e.g., deposited on) the core and is different from the first semiconductor material.

The first nanocrystal (e.g., the first semiconductor material) may include a Group II-VI compound, a Group III-V compound, a Group IV-VI compound, a Group IV element or compound, or a combination thereof. The second semiconductor material included in the shell may comprise a Group II-VI compound, a Group III-V compound, a Group IV-VI compound, a Group IV element or compound, or a combination thereof, and a metal of the second semiconductor material included in the shell may be different than a metal of the first semiconductor material of the core.

The shell may have a different composition from the first nanocrystal, and may include a Group II-VI compound, a Group III-V compound, a Group IV-VI compound, a Group IV element or compound, a metal fluoride, a metal oxide, or a combination thereof. The shell may be crystalline or amorphous. The semiconductor material included in the shell may have a bandgap which is greater than a bandgap of the core material (i.e., the first nanocrystal).

For example, the Group II-VI compound may comprise:
a binary compound such as CdSe, CdTe, ZnS, ZnSe, ZnTe, ZnO, HgS, HgSe, HgTe, MgSe, MgS, or a combination thereof;
a ternary compound such as CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS, or a combination thereof; and
a quaternary compound such as HgZnTeS, CdZnSeS, CdZnSeTe, CdZnSTe, CdHgSeS, CdHgSeTe, CdHgSTe, HgZnSeS, HgZnSeTe, HgZnSTe, or a combination thereof.

The Group III-V compound may comprise:
a binary compound such as GaN, GaP, GaAs, GaSb, AIN, AIP, AlAs, AlSb, InN, InP, InAs, InSb, or a combination thereof;
a ternary compound such as GaNP, GaNAs, GaNSb, GaPAs, GaPSb, AINP, AINAs, AINSb, AlPAs, AlPSb, InNP, InNAs, InNSb, InPAs, InPSb, or a combination thereof; and
a quaternary compound such as GaAINP, GaAINAs, GaAINSb, GaAlPAs, GaAlPSb, GaInNP, GaInNAs, GaInNSb, GaInPAs,GaInPSb, InAINP, InAINAs, InAINSb, InAIPAs, InAIPSb, or a combination thereof.

The Group IV-VI compound may comprise:
a binary compound such as SnS, SnSe, SnTe, PbS, PbSe, PbTe, and a combination thereof;
a ternary compound such as SnSeS, SnSeTe, SnSTe, PbSeS, PbSeTe, PbSTe, SnPbS, SnPbSe, SnPbTe, and a combination thereof; and
a quaternary compound such as SnPbSSe, SnPbSeTe, SnPbSTe, and a combination thereof.

The Group IV compound may comprise an element such as Si, Ge, or a combination thereof; or
a binary compound such as SiC, SiGe, or a combination thereof.

For example, the metal fluoride may include, but is not limited to, LiF, NaF, KF, BeF₂, MgF₂, CaF₂, SrF₂, CuF, CuF₂, AgF, AuF, AuF₃, ZnF₂, CdF₂, HgF₂, AlF₃, GaF₃, InF₃, SnF₂, PbF₂, or a combination thereof. The metal oxide may include, but is not limited to, CdO, In₂O₃, PbO, HgO, MgO, Ga₂O₃, Al₂O₃, ZnO, SiO₂, zinc oxysulfide, zinc oxyselenide, zinc oxysulfide selenide, indium phosphide oxide, indium phosphide oxysulfide, or a combination thereof.

When the nanocrystal particle has a core-shell structure, the boron may be present in the core, in an interface between the core and the shell, in the shell, or in a combination thereof. When the particle has a core-shell structure, the fluorine may be present in in the core, in an interface between the core and the shell, in the shell, or in a combination thereof. The boron and the fluorine may be present in the same region (i.e., in the core, in an interface between the core and the shell, or in the shell), or may be present in different regions from each other.

The shell may be a multi-layered shell having at least two layers. When the shell is a multi-layered shell, each of the adjacent layers may have the same or a different composition. When the shell is a multi-layered shell, the boron may be present in the inner layer of the shell, in the outer layer of the shell, or both. When the shell is a multi-layered shell and the nanocrystal particle further includes the fluorine, the fluorine may be included in the inner layer of the shell, in the outer layer of the shell, or both, and the boron and the fluorine may be present in the same layer or in the different layers from each other.

In the particle, the amount of the boron may range from about 0.1 mole percent (mol%) to about 50 mol% (e.g., about 0.5 mol% to about 30 mol%), or 1 mol% to 20 mol%, based on a total moles of all elements included in the particle. The amount of the boron may range from about 0.1 mol% to about 30 mol%, about 0.5 mol% to about 25 mol%, or about 1 mol% to about 20 mol%, based on a total moles of all elements included in the particle. The amount of the fluorine may range from about 0 mol% to about 30 mol%, or about 0.1 mol% to about 25 mol%, or about 1 mol% to about 20 mol%, based on a total moles of all elements included in the particle. The mole ratio between the boron and the fluorine may range from about 1:100 to about 1:0.1, for example, about 1:90 to about 1:0.2, or about 1:80 to about 1:0.33, or about 1:50 to about 1:0.5. In some examples, the mole ratio between the boron and the fluorine may range from about 1:1.5 to about 1:0.66. Within such a range, the nanocrystal particle may show enhanced quantum efficiency.

By including the fluorine (for example, within the aforementioned range), the nanocrystal particle may exhibit enhanced light-emitting efficiency. In addition, by including the boron (for example, within the aforementioned range), the nanoparticle may exhibit further enhanced light emitting efficiency and a lower level of a full width at half maximum ("FWHM") with improved reproducibility. Without wishing to be bound by any theory, when a proper amount of a boron source and a predetermined amount of a fluorine source are used during the preparation of the nanoparticles, the boron is understood to control the reactivity of the precursors and suppresses side reactions in the reaction system. As a result, it becomes possible to improve the reproducibility of the nanoparticle synthesis to provide improved light emitting efficiency (e.g., a quantum yield) and the FWHM. Also, the reaction yield (e.g., the ratio of the concentration of the product obtained after the reaction with respect to the concentration of the core precursor being introduced) may increase and the nanocrystal particles thus prepared include a selected amount of the boron. Moreover, in the product thus prepared, the amount of the side reaction product or the macro-particles may be controlled at a significantly lower level. When the fluorine is used alone, the particle thus obtained may exhibit a reduced level of light-emitting efficiency as the reaction time increases. However, when the boron is used together with the fluorine, the side reaction may be greatly suppressed and the light-emitting efficiency may not decrease even when the reaction time increases. Therefore, it becomes possible to increase the reaction time and a thick shell can be formed while avoiding negative effects such as a decrease in the light emitting efficiency.

In some embodiments, the nanocrystal particles may show light-emitting efficiency (e.g., quantum yield) of greater than or equal to about 65%, for example, greater than or equal to about 70%. The nanoparticles may have a FWHM of less than or equal to about 60 nanometers (nm), for example, less than or equal to about 55 nm, or less than or equal to about 51 nm. For example, for use in a display, the nanocrystal particles desirably provide a narrower FWHM and provide enhanced color purity or color reproducibility. The nanocrystal particles may constitute a population of particles having a uniform particle size distribution having a standard deviation of less than or equal to about 20%. In an embodiment a plurality of the particles has a particle size distribution having a standard deviation of about 1% to about 20%, or about 2% to about 18%, or about 4% to about 16%. As used herein, the standard deviation is determined by selecting a parent population consisting of at least 50 particles and measuring a longest diameter of each particle in the selected parent population. As stated above, the nanocrystal particles containing boron may have a more uniform particle size because they are less likely to include a product of a side reaction and a macro-particle, and thus a population of these particles may exhibit a lower standard deviation of a particle size distribution.

The nanocrystal particle may absorb light of a wavelength of about 300 nm to about 700 nm and may emit light of a wavelength from about 400 nm to about 600 nm, from about 600 nm to about 700 nm, or from about 550 nm to about 650 nm. The wavelength of the emitted light may be selected by controlling the composition and the size of the semiconductor nanocrystal.

The nanocrystal particle may have a particle diameter, i.e., a longest diameter in the case of a non-spherical particle, ranging from about 1 nm to about 100 nm, for example about 1 nm to about 20 nm. The shape of the nanocrystal is not particularly limited. By way of an example, the nanocrystal particle may have a spherical shape, a pyramidal shape, a multi-armed shape, or a cubic shape. The nanocrystal particle may be in the form of a nano-sized particle, a nanotube, a nanowire, a nano-fiber, a nano-plate, or the like.

The presence of the boron included in the nanocrystal particle (e.g., a semiconductor nanocrystal) may be determined by Inductively Coupled Plasma - Atomic Emission Spectroscopy ("ICP-AES") analysis, but it is not limited thereto. The presence of the fluorine included in the nanoparticle (e.g., a semiconductor nanocrystal) may be determined in various manners such as X-ray photoelectron spectroscopy ("XPS"), but it is not limited thereto. The boron and/or the fluorine may be present in the particle as they are doped therein. The fluorine may be substituted into a crystalline structure of the particle or may be introduced as an interstitial atom in the crystalline structure thereof. The fluorine may be present in the form of a metal fluoride. The metal fluoride may be a fluoride including a Group I metal, a fluoride including a Group II metal, a fluoride including a Group III metal, or a combination thereof. The metal fluoride may include LiF, NaF, KF, BeF₂, MgF₂, CaF₂, SrF₂, CuF, CuF₂, AgF, AuF, AuF₃, ZnF₂, CdF₂, HgF₂, AlF₃, GaF₃, InF₃, SnF₂, PbF₂, or a combination thereof.

A nanocrystal particle including a semiconductor material (as used herein, the nanocrystal particle may also be referred to as a semiconductor nanocrystal) makes it possible to control its energy bandgap with the size and the composition of the nanocrystal particle, and it has high color purity and thus provides desirable light emitting properties. Therefore, the nanocrystal particle has attracted significant attention as a material that may be utilized in various fields such as a display, the energy industry, the semiconductor industry, and biology related applications. However, most types of semiconductor nanocrystal particles which provide satisfactory properties include cadmium (Cd). Cadmium poses serious environmental threats and thus it is urgently desired to develop a cadmium-free semiconductor nanocrystal particle having excellent light-emitting properties. For instance, a Group III-V nanocrystal is an example of a Cd-free semiconductor nanocrystal, but its synthesis process can use a precursor that is far more susceptible to oxidation than that of a Cd-based semiconductor nanocrystal (e.g., a CdSe-based quantum dot) and the precursor thereof tends to have poor reactivity, making the control of the synthesis reaction far more complicated. The InP/ZnS core-shell semiconductor nanocrystal is one of the most researched quantum dots. However, the InP-based semiconductor nanocrystals generally exhibit lower light emitting efficiency and poor light emitting properties. In addition, a size of the particle that is used to emit a desired wavelength of light ranges from 2 nm to 5 nm, and thus the synthesis of the InP-based nanocrystal is not easy. Moreover, the light emitting properties of the Cd-free quantum dots, such as the InP nanocrystal, are lower than those of the CdSe based quantum dots.

In contrast, the aforementioned nanocrystal particles including boron and fluorine may have significantly enhanced light emitting properties even though they are not a CdSe-based quantum dot. In addition, they may constitute a population of particles having a relatively uniform size distribution and may exhibit a lower level of FWHM, enhanced color purity, and improved color reproducibility. Therefore, it becomes possible to provide high quality and environmentally friendly quantum dots. In this context, the aforementioned nanocrystal particle does not include cadmium. Cadmium is not present in the core and the shell of the nanocrystal particle. In an embodiment in which the nanocrystal particle comprises a Group II-VI compound, the Group II element may be Zn or Hg, specifically Zn. Use of Zn as the Group II element is specifically mentioned. In an embodiment the Group II-VI compound is ZnS. The nanocrystal particle is a cadmium-free nanocrystal particle, wherein the cadmium-free nanocrystal particle does not comprise cadmium.

The nanocrystal particle may be prepared in a wet chemical method and thus may have a ligand compound surface-coordinated thereon. The ligand compound may be any suitable ligand compound known in the art without particular limitation. For example, the ligand compound may include a compound of the formula RCOOH, RNH₂, R₂NH, R₃N, RSH, RH₂PO, R₂HPO, R₃PO, RH₂P, R₂HP, R₃P, ROH, RCOOR', RPO(OH)₂, or R₂POOH, wherein R and R' are independently a C1 to C24 alkyl group, a C2 to C24 alkenyl group, or a C6 to C20 aryl group, or a combination thereof. The organic ligand compound may coordinate the surface of the nanocrystals as prepared, enhancing dispersing of the nanocrystals in a solution, and it may have an effect on the light-emitting and electrical characteristics of the nanocrystals. Examples of the organic ligand compound may include, but are not limited to, methanethiol, ethanethiol, propanethiol, butanethiol, pentanethiol, hexanethiol, octanethiol, dodecanethiol, hexadecanethiol, octadecanethiol, benzylthiol, methaneamine, ethaneamine, propaneamine, butaneamine, pentaneamine, hexaneamine, octaneamine, dodecaneamine, hexadecylamine, octadecylamine, dimethylamine, diethylamine, dipropylamine, methanoic acid, ethanoic acid, propanoic acid, butanoic acid, pentanoic acid, hexanoic acid, heptanoic acid, octanoic acid, dodecanoic acid, hexadecanoic acid, octadecanoic acid, oleic acid, benzoic acid, a phosphine such as a substituted or an unsubstituted methylphosphines (e.g., trimethyl phosphine, methyl diphenyl phosphine, and the like), a substituted or an unsubstituted ethylphosphine (e.g., triethyl phosphine, ethyl diphenyl phosphine, and the like), a substituted or an unsubstituted propylphosphine, a substituted or an unsubstituted butylphosphine, a substituted or an unsubstituted pentylphosphine, a substituted or an unsubstituted octyl phosphine (e.g., trioctyl phosphine) and the like, a phosphine oxide compound such as a substituted or an unsubstituted methylphosphine oxide (e.g., trimethyl phosphine oxide, methyl diphenyl phosphine oxide, and the like), a substituted or an unsubstituted ethylphosphine oxide (e.g., triethyl phosphine oxide, ethyl diphenyl phosphine oxide, and the like), a substituted or an unsubstituted propylphosphine oxide, a substituted or an unsubstituted butylphosphine oxide, a substituted or an unsubstituted octyl phosphine oxide (e.g., trioctyl phosphine oxide and the like) and the like, a diphenylphosphine compound, a triphenylphosphine compound, an oxide compound thereof, and the like, and a phosphonic acid. The organic ligand compound may be used alone or as a combination comprising at least two of the foregoing compounds.

In another embodiment, a process of synthesizing nanocrystal particles includes:
obtaining a first mixture including a first precursor, a ligand compound, and a solvent;
optionally heating the first mixture;
adding a boron source, a second precursor, optionally a first nanocrystal and a fluorine source to the (optionally heated) first mixture to obtain a second mixture; and
heating the second mixture to a reaction temperature to carry out a reaction between the first precursor and the second precursor to form a reaction product of the first precursor and the second precursor, wherein the reaction product is a nanocrystal particle comprising a semiconductor material, boron, and fluorine, to obtain a particle including the nanocrystal. The nanocrystal particle includes the ligand compound bound to a surface thereof. The boron and the fluorine may be present as being doped in the particle or as a metal compound such as a corresponding metal boride or a corresponding metal fluoride.

The first precursor may include a plurality of compounds. The second precursor may include a plurality of compounds. When a plurality of compounds are used for the first or the second precursor, they may be added at the same time or with a time lag therebetween, and may be added at the same temperature or at different temperatures. In case of the first precursor, a mixture including an additional precursor compound, a ligand, and a solvent may be first prepared and then added to the first mixture.

The first precursor may include a Group II metal, a Group III metal, or a Group IV metal, and may be an elemental metal (e.g., metal powder), an alkylated metal compound, a metal alkoxide, a metal carboxylate, a metal nitrate, a metal perchlorate, a metal sulfate, a metal acetylacetonate, a metal halide, a metal cyanide, a metal hydroxide, a metal oxide, a metal peroxide, or a combination thereof.

Examples of the first precursor may include, but are not limited to, dimethyl zinc, diethyl zinc, zinc acetate, zinc acetylacetonate, zinc iodide, zinc bromide, zinc chloride, zinc fluoride, zinc carbonate, zinc cyanide, zinc nitrate, a zinc oxide, zinc peroxide, zinc perchlorate, zinc sulfate, dimethyl cadmium, diethyl cadmium, cadmium acetate, cadmium acetylacetonate, cadmium iodide, cadmium bromide, cadmium chloride, cadmium fluoride, cadmium carbonate, cadmium nitrate, cadmium oxide, cadmium perchlorate, cadmium phosphide, cadmium sulfate, mercury acetate, mercury iodide, mercury bromide, mercury chloride, mercury fluoride, mercury cyanide, mercury nitrate, mercury oxide, mercury perchlorate, mercury sulfate, lead acetate, lead bromide, lead chloride, lead fluoride, lead oxide, lead perchlorate, lead nitrate, lead sulfate, lead carbonate, tin acetate, tin bis(acetylacetonate), tin bromide, tin chloride, tin fluoride, tin oxide, tin sulfate, germanium tetrachloride, germanium oxide, germanium ethoxide, trimethyl gallium, triethyl gallium, gallium acetylacetonate, gallium chloride, gallium fluoride, gallium oxide, gallium nitrate, gallium sulfate, trimethyl indium, indium acetate, indium hydroxide, indium chloride, indium oxide, indium nitrate, indium sulfate, thallium acetate, thallium acetylacetonate, thallium chloride, thallium oxide, thallium ethoxide, thallium nitrate, thallium sulfate, and thallium carbonate. The first precursor may be used alone or in a combination of at least two of the foregoing compounds depending on the composition of the nanocrystal intended to be synthesized.

In an embodiment, the first precursor may include, but are not limited to, dimethyl zinc, diethyl zinc, zinc acetate, zinc acetylacetonate, zinc iodide, zinc bromide, zinc chloride, zinc fluoride, zinc carbonate, zinc cyanide, zinc nitrate, a zinc oxide, zinc peroxide, zinc perchlorate, zinc sulfate, mercury acetate, mercury iodide, mercury bromide, mercury chloride, mercury fluoride, mercury cyanide, mercury nitrate, mercury oxide, mercury perchlorate, mercury sulfate, lead acetate, lead bromide, lead chloride, lead fluoride, lead oxide, lead perchlorate, lead nitrate, lead sulfate, lead carbonate, tin acetate, tin bis(acetylacetonate), tin bromide, tin chloride, tin fluoride, tin oxide, tin sulfate, germanium tetrachloride, germanium oxide, germanium ethoxide, trimethyl gallium, triethyl gallium, gallium acetylacetonate, gallium chloride, gallium fluoride, gallium oxide, gallium nitrate, gallium sulfate, trimethyl indium, indium acetate, indium hydroxide, indium chloride, indium oxide, indium nitrate, indium sulfate, thallium acetate, thallium acetylacetonate, thallium chloride, thallium oxide, thallium ethoxide, thallium nitrate, thallium sulfate, and thallium carbonate. The first precursor may be used alone or in a combination of at least two of the foregoing compounds depending on the composition of the nanocrystal intended to be synthesized.

The ligand compound is the same as set forth above.

The solvent may comprise a C6 to C22 primary amine such as hexadecyl amine; a C6 to C22 secondary amine such as dioctyl amine; a C6 to C40 tertiary amine such as trioctyl amine; a heterocyclic compound having a nitrogen atom such as pyridine; a C6 to C40 aliphatic hydrocarbon (e.g., an alkane, an alkene, or an alkyne) such as hexadecane, octadecane, octadecene, squalane, and the like; a C6 to C30 aromatic hydrocarbon such as phenyl dodecane, phenyl tetradecane, phenyl hexadecane, and the like; a phosphine substituted with a C6 to C22 alkyl group such as trioctyl phosphine; a phosphine oxide substituted with a C6 to C22 alkyl group such as trioctyl phosphine oxide; a C12 to C22 aromatic ether such as phenyl ether, benzyl ether, and the like; and a combination thereof.

In the first mixture, the amounts of the first precursor, the ligand compound, and the solvent may be selected appropriately as desired, and they are not particularly limited. In some embodiments, the mole ratio between the first precursor and the ligand (first precursor:ligand) is about 1:4 to about 1:0.5, or about 1:3.5 to about 1:1, or about 1:3 to about 1:1.5.

The optional heating of the first mixture may be carried out by heating the first mixture under vacuum at a temperature of greater than or equal to about 40 °C, for example, greater than or equal to about 50 °C, greater than or equal to about 60 °C, greater than or equal to about 70 °C, greater than or equal to about 80 °C, greater than or equal to about 90 °C, greater than or equal to about 100°C, or greater than or equal to about 120°C. The heating of the first mixture may include heating the same under a nitrogen atmosphere at a temperature of greater than or equal to about 100 °C, for example, greater than or equal to about 150 °C, greater than or equal to about 180 °C, or greater than or equal to about 200 °C.

A boron source, a second precursor, optionally a first nanocrystal, and a fluorine source are added to the (optionally heated) first mixture to obtain a second mixture.

When the second mixture include the first nanocrystal, the resulting nanocrystal particle thus prepared may have a core-shell structure wherein a nanocrystal produced by a reaction between the first and the second precursors is deposited on the surface of the first nanocrystal (particle). When the first nanocrystal also has a core-shell structure, the resulting nanocrystal may have a core-multishell structure, wherein the boron or the boron and the fluorine may be included in the outer layer of the shell.

In the second mixture, the amounts of the boron source, the second precursor, the fluorine source, and optionally the first nanocrystal may be selected appropriately in light of a desired composition of the nanocrystal particle.

The addition of the boron source, the second precursor, and the fluorine source, and optionally the first nanocrystal, to the (optionally heated) first mixture may be carried out at the same time or sequentially. The boron source, the second precursor, and optionally the fluorine source, and optionally the first nanocrystal, are added to the heated first mixture in any order.

The second precursor may be appropriately selected without any particular limitation in light of the types of the nanocrystal intended to be synthesized. In a non-limiting example, the second precursor may be a Group V element, a compound including a Group V element, a Group VI element, or a compound including a Group VI element. Non-limiting examples of the second precursor may include, but are not limited to, sulfur (S), selenium (Se), selenide, tellurium, telluride, phosphorous (P), arsenic (As), arsenide, nitrogen (N) or a nitrogen containing compound, hexanethiol, octanethiol, decanethiol, dodecanethiol, hexadecanethiol, mercaptopropylsilane, sulfur-trioctylphosphine ("S-TOP"), sulfur-tributylphosphine ("S-TBP"), sulfur-triphenylphosphine ("S-TPP"), sulfur-trioctylamine ("S-TOA"), bis(trimethylsilyl)sulfide, ammonium sulfide, sodium sulfide, selenium-trioctylphosphine ("Se-TOP"), selenium-tributylphosphine ("Se-TBP"), selenium-triphenylphosphine ("Se-TPP"), tellurium-tributylphosphine ("Te-TBP"), tellurium-triphenylphosphine ("Te-TPP"), tris(trimethylsilyl)phosphine, tris(dimethylamino)phosphine, triethylphosphine, tributylphosphine, trioctylphosphine, triphenylphosphine, tricyclohexylphosphine, arsenic oxide, arsenic chloride, arsenic sulfate, arsenic bromide, arsenic iodide, nitric oxide, nitric acid, and ammonium nitrate. The second precursor may be used alone or in a combination of at least two compounds depending on the composition of the nanocrystal intended to be synthesized.

The boron source may include a complex of borane (BH₃) with a substance having a lone pair of electrons. The substance having a lone pair of electrons may include a C1 to C16 amine, a C2 to C16 ether such as diethylether and dimethyl ether, a C3 to C16 carbonyl-containing compound such as methylethyl ketone, tetrahydrofuran, a C2 to C16 alkyl sulfide such as diethyl sulfide and dimethyl sulfide, arylmethyl sulfide, allylmethyl sulfide, tetrahydrothiophene, pyridine, PF₃, H⁻, or a combination thereof.

The fluorine source may include HF, NH₄F, LiF, NaF, KF, BeF₂, MgF₂, CaF₂, SrF₂, CuF, CuF₂, AgF, AuF, AuF₃, ZnF₂, CdF₂, HgF₂, AlF₃, GaF₃, InF₃, SnF₂, PbF₂, BF₃, HBF₄, a BF₄⁻ containing salt such as alkylammonium tetrafluoroborate, a PF₆⁻ containing salt, B(Ar)₃ (wherein Ar is a C6 to C20 aromatic hydrocarbon having fluorine substituted for at least one hydrogen atom) such as B(C₆F₅)₃, or a combination thereof.

In some embodiments, the boron/fluorine source may be an ionic liquid. For example, the ionic liquid may be a substituted or unsubstituted imidazolium salt, a substituted or unsubstituted pyrazolium salt, a substituted or unsubstituted triazolium salt, a substituted or unsubstituted thiazolium salt, a substituted or unsubstituted oxazolium salt, a substituted or unsubstituted pyridazinium salt, a substituted or unsubstituted pyrimidinium salt, a substituted or unsubstituted ammonium salt, a substituted or unsubstituted phosphonium salt, a substituted or unsubstituted sulfonium salt, a substituted or unsubstituted pyridinium salt, a substituted or unsubstituted pyrrolidinium salt, or a combination thereof. The ionic liquid may be an imidazolium salt, a pyridinium salt, a phosphonium salt, or an ammonium salt, and it may have F⁻, BF₄⁻, or PF₆⁻ as an anion. The ionic liquid may be used alone or in a combination of at least two salts.

The boron source and the fluorine source may include a single compound having boron and fluorine. The single compound having boron and fluorine may include BF₃, HBF₄, NaBF₄, NH₄BF₄, an alkylammonium tetrafluoroborate such as tBu₄NBF₄, or a combination thereof. In an embodiment the boron and the fluorine source consist of BF₃, HBF₄, NaBF₄, NH₄BF₄, or a C4 to C32 alkylammonium tetrafluoroborate such as tBu₄NBF₄.

The boron source (or the single source for the boron and the fluorine) may be added to the first mixture in an amount of about 0.5 mol% to about 500 mol%, for example, about 1 mol% to about 300 mol%, based on the total moles of the first metal precursor. The fluorine source may be added to the first mixture in an amount of 0 % to about 500 mol%, for example, at least about 0.5 mol%, for example, about 1 mol% to about 300 mol%, or about 2 mol% to about 200 mol%, based on the total moles of the first metal precursor. When the boron source is added in the aforementioned range, it is possible to produce nanoparticles with high reproducibility and without any substantial side reaction, the nanoparticle having excellent light emitting properties and a uniform particle size.

The fluorine source may be dissolved in a carrier solvent and added as a solution, and the carrier solvent may include water, a C3 to C12 ketone such as acetone, methylethyl ketone, and the like, a primary amine, a secondary amine, a tertiary amine (e.g., trioctyl amine), a heterocyclic compound having a nitrogen atom (e.g., pyridine), a C6 to C40 olefin, a C6 to C40 aliphatic hydrocarbon, a C6 to C30 aromatic hydrocarbon substituted with a C1 to C20 alkyl group, a primary, secondary, or tertiary phosphine substituted with a C6 to C22 alkyl group, a primary, secondary, or tertiary phosphine oxide substituted with a C6 to C22 alkyl group, an aromatic ether, or a combination thereof. The solution may include the fluorine source in an amount of greater than or equal to about 0.001 moles per liter (mol/L).

In some embodiments, the heating of the second mixture to the reaction temperature to trigger a reaction between the first precursor and the second precursor may be carried out without microwave irradiation.

The reaction temperature is not particularly limited and may be selected appropriately in light of the type of the first precursor, the second precursor, the source of the halogen element, the solvent as used, and the like. For example, the reaction temperature may be about 100 °C to 350 °C, for example, about 180 °C to 340 °C, or about 220 °C to 320 °C.

The first nanocrystal (e.g., a first semiconductor nanocrystal particle) may include a Group II-VI compound, a Group III-V compound, a Group IV-VI compound, a Group IV compound, or a combination thereof. In an embodiment, the first nanocrystal may include a Group III-V compound.

The nanocrystal particle formed by the reaction between the first precursor and the second precursor may include a Group II-VI compound, a Group III-V compound, a Group IV-VI compound, a Group IV element or compound, or a combination thereof.

The Group II-VI compound, the Group III-V compound, and the Group IV-VI compound are the same as set forth above. When the semiconductor nanocrystal includes at least two kinds of compounds or it is a binary element compound, a ternary element compound, or a quaternary element compound, it may be present in a form of an alloy, or in a form of a structure wherein at least two different crystalline structures coexist, for example in layers to provide a core/shell structure, or as compartments to provide a multi-pod structure.

The aforementioned method of synthesizing a nanocrystal particle may further include: adding a non-solvent to a reaction product of the first and second precursors to separate a nanocrystal particle, to which the ligand compound is coordinated. The non-solvent may be a polar solvent that may be combined with the solvent used during the reaction, but is not capable of dispersing nanocrystals. The non-solvent may be selected depending on the types of the solvent being used in the reaction. For example, the non-solvent may comprise acetone, ethanol, butanol, isopropanol, ethanediol, water, tetrahydrofuran ("THF"), dimethyl sulfoxide ("DMSO"), diethylether, formaldehyde, acetaldehyde, a solvent having a similar solubility parameter to the foregoing solvent, or a combination thereof. The separation may be performed using centrifugation, precipitation, chromatography, or distillation. The separated nanocrystals may be added into a washing solvent as desired. The washing solvent is not particularly limited, and may be a solvent having a similar solubility parameter to the ligand, such as hexane, heptane, octane, chloroform, toluene, benzene, and the like.

The nanocrystal prepared in accordance with the aforementioned process may exhibit a high quantum yield. The semiconductor nanocrystal particles may find their utility in various fields such as a light emitting diode ("LED"), a solar cell, and a biosensor. According to the aforementioned method, it is possible to obtain a semiconductor nanocrystal particle having enhanced light emitting properties.

Hereinafter, the present disclosure is illustrated in more detail with reference to specific examples. However, they are exemplary embodiments of the present invention, and the present invention is not limited thereto.

### Examples

### Reference Example 1: Preparation of InP core

0.2 millimole (mmol) (0.058 grams (g)) of indium acetate, 0.6 mmol (0.15 g) of palmitic acid, and 10 milliliters (mL) of 1-octadecene are placed in a flask and heated under a vacuum state at 120 °C for one hour, and then is heated to 280 °C after the atmosphere in the flask is exchanged with N₂. Then, a mixed solution of 0.1 mmol (29 microliters (µL)) of tris(trimethylsilyl)phosphine ("TMS3P") and 0.5 mL of trioctylphosphine ("TOP") is quickly injected thereto and the reaction proceeds for 20 minutes. The reaction mixture is then cooled to room temperature rapidly and acetone is added thereto to precipitate nanocrystals, which are then separated by centrifugation and dispersed again in toluene. A first UV absorption maximum wavelength of the InP core nanocrystals thus prepared is 560 nm to 590 nm.

### Reference Example 2: Preparation of an InP core including boron and fluorine

0.2 mmol (0.058 g) of indium acetate, 0.6 mmol (0.15 g) of palmitic acid, and 10 mL of 1-octadecene are placed in a flask and heated at 120 °C under a vacuum state for one hour, and then the atmosphere in the flask is exchanged with N₂. The reaction solution is heated to 280 °C and 0.7 mmol of ethoxyethane-trifluoroborane (BF₃.Et₂O) is quickly added thereto. Subsequently, a mixed solution of 0.1 mmol of tris(trimethylsilyl)phosphine ("TMS3P") and 0.5 mL of trioctylphosphine ("TOP") is quickly injected thereto. The reaction proceeds for 20 minutes. The reaction mixture is then rapidly cooled to room temperature and acetone is added thereto to precipitate nanocrystals, which are then separated by centrifugation and dispersed in toluene. The InP semiconductor nanocrystals thus prepared have a light-emitting peak similar to that of the nanocrystal of Reference Example 1. Results of the Inductively Coupled Plasma - Atomic Emission Spectroscopy ("ICP-AES") analysis and the XPS analysis may confirm that the InP nanocrystal includes boron and fluorine.

### Example 1: Preparation of an InP/BF_ZnS nanocrystal particle

1.2 mmol (0.224g) of zinc acetate, 2.4 mmol (0.757 g) of oleic acid, and 10 mL of trioctylamine are placed in a flask and heated at 120 °C under a vacuum state for one hour, and then the atmosphere in the flask is exchanged with N₂. Then, the reaction solution is heated to 280 °C and 0.07 mL of a 0.2 M toluene solution of borane dimethylamine (BH₃NMe₂H) is quickly injected thereto, and then 1 mL of the InP core solution of Reference Example 1 (OD= optical density of 1^{st} excitonic absorption, OD: 0.3, measured as diluted with toluene by 100 times) is added thereto and then 2.4 mmol of S/TOP is added. A mixture of 0.14 mmol of HF (an aqueous solution of 6 µL) and 1.5 mL of trioctylamine ("TOA") is subsequently quickly injected thereto, the reaction is proceeded for 2 hours. The reaction mixture is then rapidly cooled to room temperature and ethanol is added thereto to precipitate nanocrystals, which are then separated by centrifugation and dispersed in toluene.

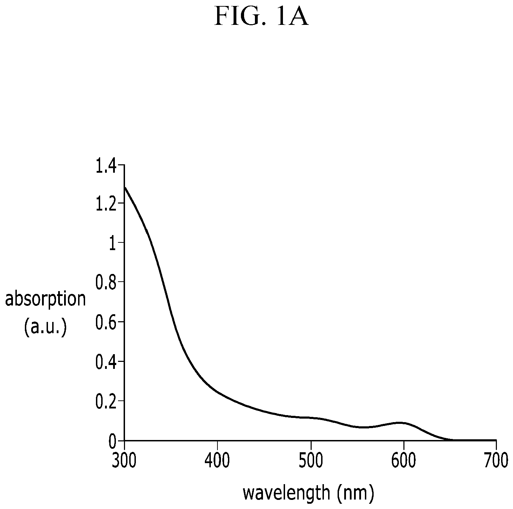

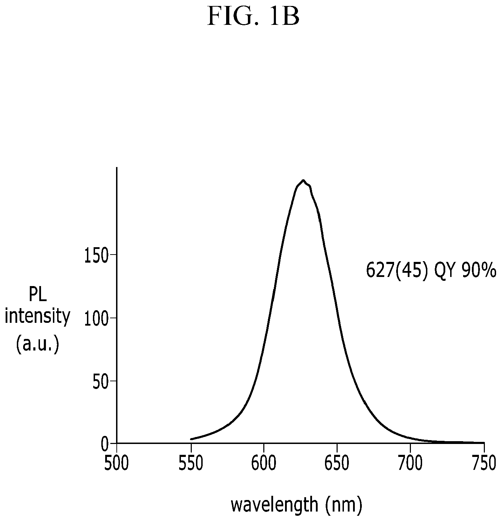

Using a spectrometer (manufactured by Hitachi Co. Ltd., model name: F-7000), a photoluminescence spectrum is obtained for the nanocrystal particles prepared, and the results are shown in FIG. 1. A light-emitting peak, a quantum yield, and a FWHM are obtained therefrom and the results are compiled in Table 1. An Inductively Coupled Plasma - Atomic Emission Spectroscopy ("ICP-AES") analysis is performed using Shimadzu ICPS-8100 equipment, and the results are compiled in Table 2.

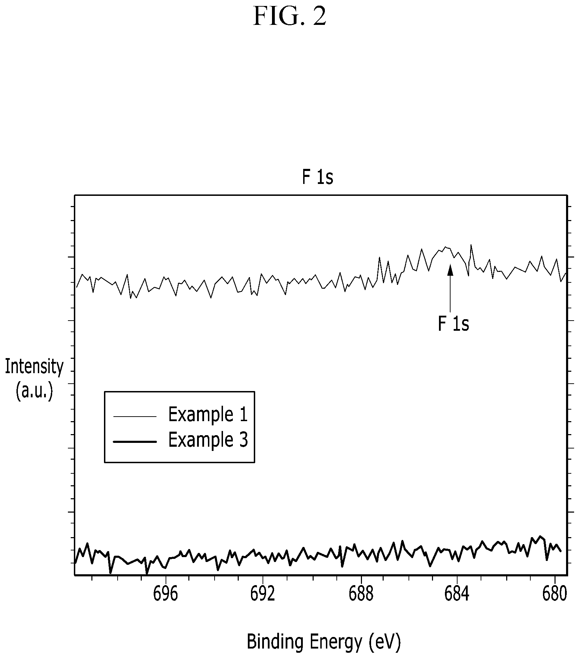

An X-ray photoelectron spectroscopy elemental analysis is performed for the nanocrystal particles prepared using Quantum 2000 equipment of Physical Electronics under the following conditions: 0.5-15 keV, 300 W, minimum analysis depth: 10 micrometer, sputter rate: 0.1 nm/min. Some of the results are shown in FIG. 2. The results of the XPS elemental analysis confirm that the amount of the fluorine is 0.29 mole per mole of In (indium).

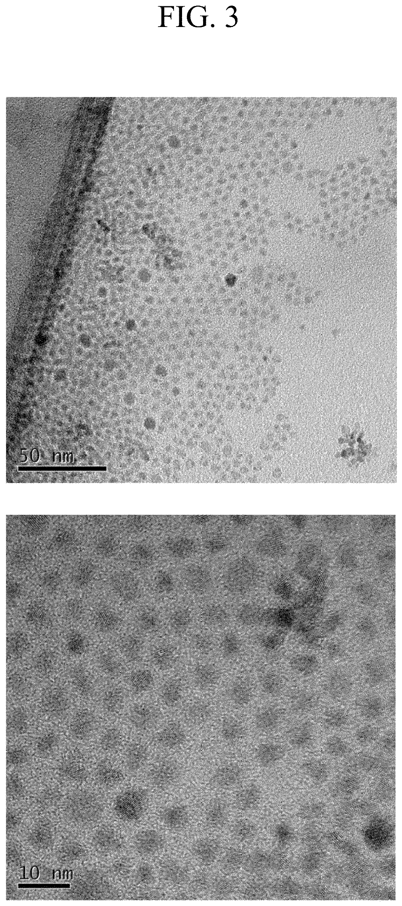

Using a UT F30 Tecnai electron microscope, a transmission electron microscopy analysis is performed for the nanocrystal thus obtained and the results are shown in FIG. 3.

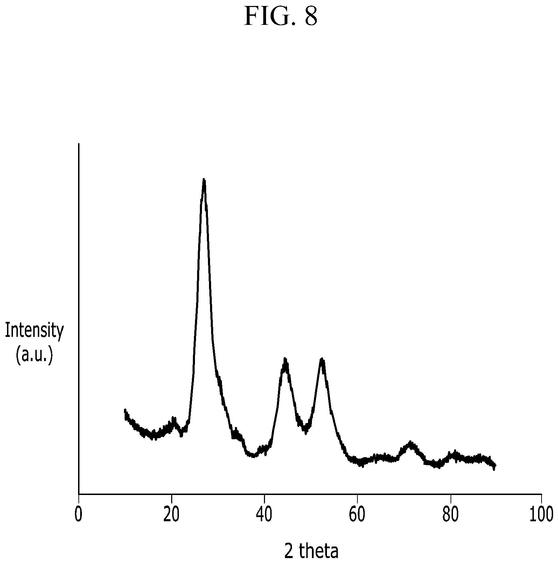

An X-ray diffraction analysis is made for the prepared nanocrystals and the results are shown in FIG. 8. The results of FIG. 8 confirm that substantially no crystalline peak due to the presence of the boron exists.

### Example 2: Preparation of an InP/BF_ZnS nanocrystal particle

1.2 mmol (0.224 g) of zinc acetate, 2.4 mmol of oleic acid, and 10 mL of trioctylamine are placed in a flask and heated at 120 °C under a vacuum state for one hour, and then the atmosphere in the flask is exchanged with N₂. The reaction solution is heated to 280 °C and 0.7 mmol of ethoxyethane-trifluoroborane (BF₃.Et₂O) is quickly injected thereto, and then 1 mL of the InP core solution of Reference Example 1 (OD = optical density of 1^{st} excitonic absorption, OD: 0.3, measured as diluted with toluene by 100 times) is added thereto and then 2.4 mmol of S/TOP is added. Then, the reaction proceeds for 2 hours. The reaction mixture is then rapidly cooled to room temperature and ethanol is added thereto to precipitate nanocrystals, which are then separated by centrifugation and dispersed in toluene.

Using a spectrometer (manufactured by Hitachi Co. Ltd., model name: F-7000), a photoluminescence spectrum is obtained for the nanocrystal particles prepared above, and from the results thereof, a light-emitting peak, a quantum yield, and a FWHM are obtained and the results are compiled in Table 1. An Inductively Coupled Plasma - Atomic Emission Spectroscopy ("ICP-AES") analysis is performed using Shimadzu ICPS-8100 equipment, and the results are compiled in Table 2.

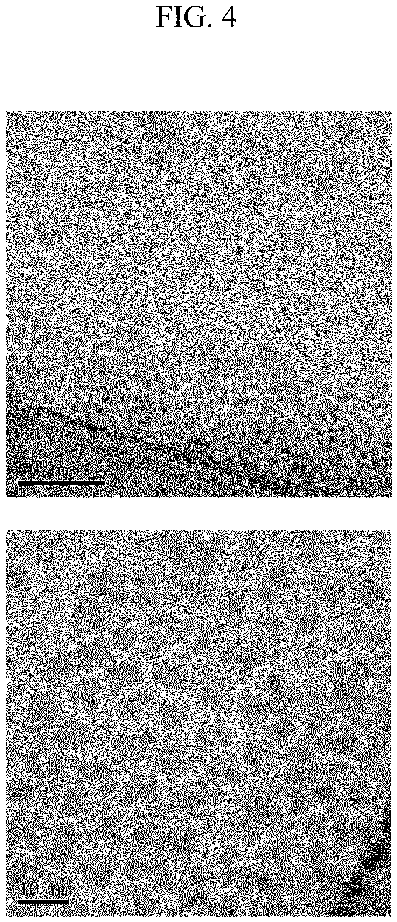

Using a UT F30 Tecnai electron microscope, a transmission electron microscopy analysis is performed for the nanocrystal thus obtained, and the results are shown in FIG. 4.

### Reference Example 3: Preparation of an InP/B_ZnS nanocrystal particle

1.2 mmol (0.224 g) of zinc acetate, 2.4 mmol of oleic acid, and 10 mL of trioctylamine are placed in a flask, and heated at 120 °C under a vacuum state for one hour, and then the atmosphere in the flask is exchanged with N₂. The reaction solution is heated to 280 °C and 0.07 mL of a 0.2 M toluene solution of borane dimethylamine (BH₃NMe₂H) is quickly injected thereto, and then 1 mL of the InP core solution of Reference Example 1 (OD= optical density of 1^{st} excitonic absorption, OD: 0.3, measured as diluted with toluene by 100 times) is added thereto and then 2.4 mmol of S/TOP is added. The reaction proceeds for 2 hours. The reaction mixture is then rapidly cooled to room temperature and ethanol is added thereto to precipitate nanocrystals, which are then separated by centrifugation and dispersed in toluene.

Using a spectrometer (manufactured by Hitachi Co. Ltd., model name: F-7000), a photoluminescence spectrum is obtained for the nanocrystal particles prepared above, and from the results thereof, a light-emitting peak, a quantum yield, and a FWHM are obtained, and the results are compiled in Table 1. An Inductively Coupled Plasma - Atomic Emission Spectroscopy ("ICP-AES") analysis is performed using Shimadzu ICPS-8100 equipment, and the results are compiled in Table 2.

An X-ray photoelectron spectroscopy elemental analysis is performed for the nanocrystal particles prepared using Quantum 2000 equipment of Physical Electronics under the following conditions: 0.5-15 keV, 300 W, minimum analysis region: 10 micro, sputter rate: 0.1 nm/min. The results are shown in FIG. 2. The results of FIG. 2 confirm that the amount of the fluorine is zero.

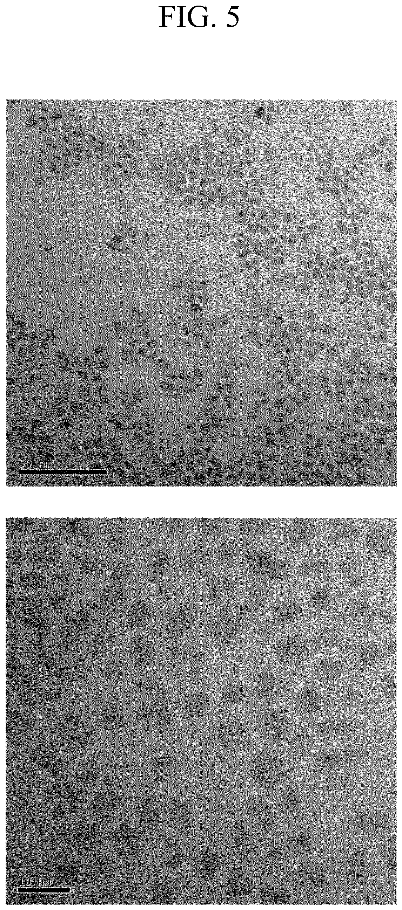

Using a UT F30 Tecnai electron microscope, a transmission electron microscopy analysis is performed for the nanocrystal thus obtained, and the results are shown in FIG. 5.

### Example 4: Preparation of an InP/BF_ZnS nanocrystal particle

Nanocrystal particles are prepared in the same manner as set forth in Example 2, except that a solution prepared by dissolving 0.7 mmol of tert-butyl ammonium tetrafluoroborate (tBu₄NBF₄) in 2 mL of acetone is used instead of the 0.7 mmol of ethoxyethane-trifluoroborane (BF₃.Et₂O).

Using a spectrometer (manufactured by Hitachi Co. Ltd., model name: F-7000), a photoluminescence spectrum is obtained for the nanocrystal particles prepared above, and from the results thereof, a light-emitting peak, a quantum yield, and a FWHM are obtained therefrom, and the results are compiled in Table 1. An Inductively Coupled Plasma - Atomic Emission Spectroscopy ("ICP-AES") analysis is performed using Shimadzu ICPS-8100 equipment, and the results are compiled in Table 2.

### Example 5: Preparation of an InP/BF_ZnS nanocrystal particle

1.2 mmol of zinc acetate, 2.4 mmol of oleic acid, and 10 mL of trioctylamine are placed in a flask and heated at 120 °C under a vacuum state for one hour, and then the atmosphere in the flask is exchanged with N₂. The reaction solution is heated to 280 °C and 0.07 mmol of ethoxyethane-trifluoroborane (BF₃.Et₂O) is quickly injected thereto, and then 1 mL of the InP core solution of Reference Example 1 (OD= optical density of 1^{st} excitonic absorption, OD: 0.3, measured as diluted with toluene by 100 times) is added thereto and then 2.4 mmol of S-TOP is added. After a mixture of 0.14 mmol of HF (an aqueous solution of 6 µL) and 1.5 mL of trioctylamine ("TOA") is quickly injected thereto, the reaction proceeds for 2 hours. The reaction mixture is then rapidly cooled to room temperature and ethanol is added thereto to precipitate nanocrystals, which are then separated by centrifugation and dispersed in toluene.

Using a spectrometer (manufactured by Hitachi Co. Ltd., model name: F-7000), a photoluminescence spectrum is obtained for the nanocrystal particles prepared above, and from the results thereof, a light-emitting peak, a quantum yield, and a FWHM are obtained, and the results are compiled in Table 1. An Inductively Coupled Plasma - Atomic Emission Spectroscopy ("ICP-AES") analysis is performed using Shimadzu ICPS-8100 equipment, and the results are compiled in Table 2.

### Comparative Example 1: Preparation of InP/ZnS nanocrystal

1.2 mmol (0.224 g) of zinc acetate, 2.4 mmol of oleic acid, and 10 mL of trioctylamine are placed in a flask and heated at 120 °C under a vacuum state for one hour, and then the atmosphere in the flask is exchanged with N₂. The reaction solution is heated to 280 °C, and then 1 mL of the InP core solution of Reference Example 1 (OD= optical density of 1^{st} excitonic absorption, OD: 0.3, measured as diluted with toluene by 100 times) is added thereto and then 2.4 mmol of S-TOP is added. The reaction proceeds for 2 hours. The reaction mixture is then rapidly cooled to room temperature and ethanol is added thereto to precipitate nanocrystals, which are then separated by centrifugation and dispersed in toluene.

Using a spectrometer (manufactured by Hitachi Co. Ltd., model name: F-7000), a photoluminescence spectrum is obtained for the nanocrystal particles prepared above, and from the results thereof, a light-emitting peak, a quantum yield, and a FWHM are obtained therefrom, and the results are compiled in Table 1. An Inductively Coupled Plasma - Atomic Emission Spectroscopy ("ICP-AES") analysis is performed using Shimadzu ICPS-8100 equipment, and the results are compiled in Table 2.

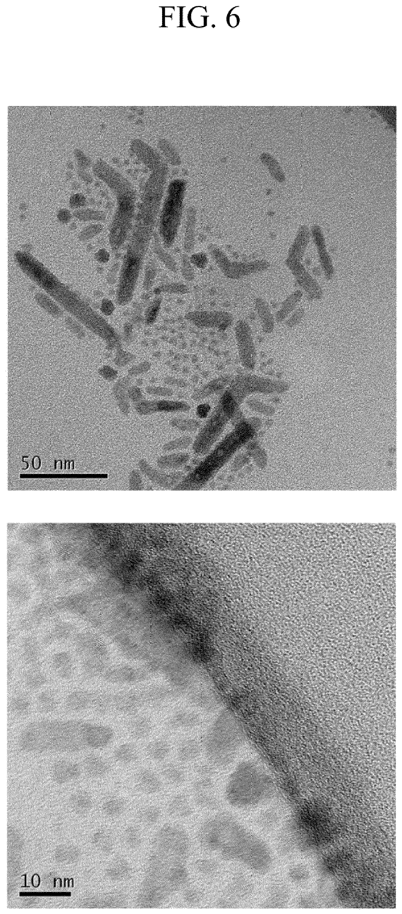

Using a UT F30 Tecnai electron microscope, a transmission electron microscopy analysis is performed for the nanocrystal thus obtained, and the results are shown in FIG. 6.

### Comparative Example 2: Preparation of InP/F_ZnS nanocrystal

1.2 mmol (0.224 g) of zinc acetate, 2.4 mmol of oleic acid, and 10 mL of trioctylamine are placed in a flask and heated at 120 °C under a vacuum state for one hour, and then the atmosphere in the flask is exchanged with N₂. The reaction solution is heated to 280 °C, and then 1 mL of the InP core solution of Reference Example 1 (OD= optical density of 1^{st} excitonic absorption, OD: 0.3, measured as diluted with toluene by 100 times) is added thereto and then 2.4 mmol of STOP is added. After a mixture of 0.14 mmol of HF (an aqueous solution of 6 µL) and 1.5 mL of trioctylamine ("TOA") is quickly injected thereto, the resulting mixture is heated to 280 °C and the reaction proceeds for 2 hours. The reaction mixture is then rapidly cooled to room temperature and ethanol is added thereto to precipitate nanocrystals, which are then separated by centrifugation and dispersed in toluene.

Using a spectrometer (manufactured by Hitachi Co. Ltd., model name: F-7000), a photoluminescence spectrum is obtained for the nanocrystal particles prepared above, and from the results thereof, a light-emitting peak, a quantum yield, and a FWHM are obtained therefrom, and the results are compiled in Table 1. An Inductively Coupled Plasma - Atomic Emission Spectroscopy ("ICP-AES") analysis is performed using Shimadzu ICPS-8100 equipment, and the results are compiled in Table 2.

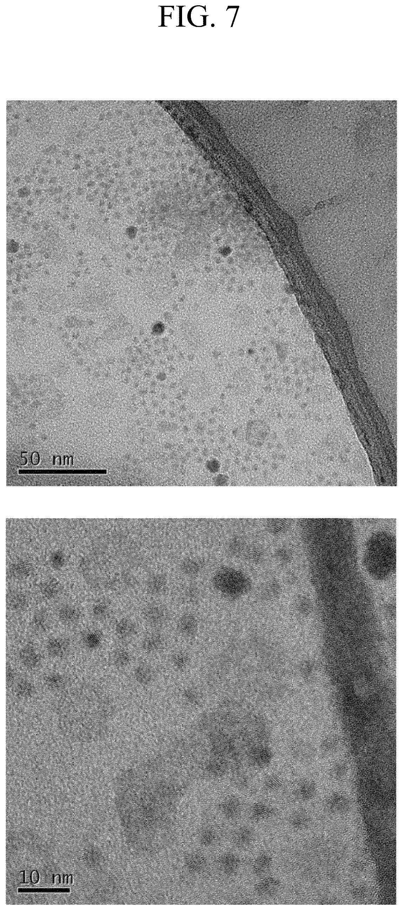

Using a UT F30 Tecnai electron microscope, a transmission electron microscopy analysis is performed for the nanocrystal thus obtained, and the results are shown in FIG. 7.

**Table 1**

| | Conditions for formation of ZnS on the InP core | Peak wavelength of emitted light (nm), (FWHM: nm) quantum yield % |
|---|---|---|
| Example 1 | BH₃+HF-ZnS | 627(43) 90 % |
| Example 2 | BF₃ 0.7mmol-ZnS, | 633(49) 60 % |
| Reference Example 3 | BH₃-ZnS | 632(51) 4 % |
| Example 4 | t-BuNBF₄-ZnS | 635(58) 69 % |
| Example 5 | BF₃ 0.07mmol+HF_ZnS | 628(51) 80 % |
| Comp. Example 1 | ZnS | 636(55) 46 % |
| Comp. Example 2 | HF-ZnS | 628(49) 75 % |

**Table 2**

| | | In | P | Zn | S | B |
|---|---|---|---|---|---|---|
| Example 1 | InP/ZnS +BH₃,HF | 1 | 1.01 | 2.28 | 1.33 | 0.38 |
| Example 2 | InP/ZnS +BF₃ | 1 | 1.08 | 13.0 | 7.30 | 2.63 |
| Reference Example 3 | InP/ZnS +BH₃ | 1 | 0.99 | 2.52 | 1.80 | 0.24 |
| Example 4 | InP/ZnS +tBu₄NBF₄ | 1 | 0.95 | 4.41 | 1.96 | 0.76 |
| Comp. Example 1 | InP/ZnS | 1 | 0.82 | 2.54 | 1.89 | 0 |
| Comp. Example 2 | InP/ZnS + HF | 1.00 | 0.99 | 3.27 | 0.52 | 0 |

The results shown in Table 1 confirm the following. The quantum yield of nanocrystals obtained in Comparative Example 1 is only about 46 %. In contrast, the nanocrystal obtained in Example 1 using BH₃+HF has a quantum yield of 90 %. The ICP-AES analysis results of Table 2 confirm that the nanocrystals of the examples include boron in the particle. In addition, the XPS results of FIG. 2 confirm that the nanocrystal particles of Example 1 include fluorine. In Reference Example 3, the nanocrystal particles prepared using BH₃ have a quantum yield of 44 %, but they have an improved value of the FWHM. The results of Table 2 and FIG. 2 confirm that the nanoparticles of Reference Example 3 include boron but do not include fluorine.

The nanoparticles of Examples 2, 4, and 5 prepared using BF₃, tBu₄NBF₄, and BF₃+HF, respectively, have greatly enhanced quantum yield in comparison with the nanoparticles of Comparative Example 1, and the TEM image of FIG. 3 and the ICP-AES results of Table 2 confirm that they may have a thicker shell. In addition, when the molar ratio of the Zn precursor and the ligand compound (i.e., oleic acid) is controlled to be about 1:3 or less (e.g., about 1:2 or less), it is possible to control the FWHM and enhance efficiency. This implies that the method of the present embodiments has flexibility in selecting the reaction conditions.

The TEM images of FIG. 3 to FIG. 7 confirm that the products of Comparative Examples 1 and 2 include side reaction products and macro-particles such as ZnF₂ and ZnO besides the nanocrystal, while the products of Examples 1, 2, and Reference Example 3 including boron do not substantially include the side reaction products or macro-particles.

### Reproducibility Test

Processes set forth in Example 5 and processes set forth in Comparative Example 2 are repeated four times. For the nanocrystal particles, the light-emitting peak wavelength, the full width at half maximum ("FWHM"), the quantum yield ("QY"), and the yield of the processes are measured and compiled in Table 3. The yield of the processes is a percentile value of the ratio of the concentration of the product to the concentration of the core added to the reaction mixture. The data in Table 3 is the average of the corresponding data for four times experiments.

**Table 3**

| | Example 5 | Comparative Example 2 |
|---|---|---|
| Repetitions | 4 | 4 |
| Photoluminescence wavelength (nm) | 627±2.6 | 628±3.1 |
| FWHM (nm) | 48±2.4 | 53±1.0 |
| Quantum Yield (%) | 82±2.5 | 76±7.0 |
| Yield of the process (%) | 76±5.8 | 60±15 |

The results of Table 3 confirm that the process of the examples may produce nanoparticles having a narrower FWHM and enhanced quantum yield at a higher yield, and that the disclosed process provides improved reproducibility.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A nanocrystal particle comprising:
a semiconductor material;
boron and fluorine, wherein the particle has an organic ligand bound to a surface thereof, the boron is present as being doped in the particle or as a metal boride and the fluorine is present as being doped in the particle or as a metal fluoride,
wherein the semiconductor material comprises a Group II-VI compound, a Group III-V compound, a Group IV-VI compound, or a combination thereof,
wherein the Group II-VI compound comprises a Group II metal selected from the group consisting of Zn, Hg, and Mg and a Group VI element, and wherein the Group III-V compound comprises a Group III metal selected from the group consisting of Al, In, Ga, and Tl and a Group V element, and wherein the Group IV-VI compound comprises a Group IV element selected from the group consisting of Si, Ge, and Sn, and a Group VI element, and
wherein the nanocrystal particle does not include cadmium.

2. The nanocrystal particle of Claim 1, wherein the Group II-VI compound comprises at least one selected from the group consisting of ZnS, ZnSe, ZnTe, ZnO, HgS, HgSe, HgTe, MgSe, MgS, ZnSeS, ZnSeTe, ZnSTe, HgSeS, HgSeTe, HgSTe, HgZnS, HgZnSe, HgZnTe, MgZnSe, MgZnS, HgZnTeS, HgZnSeS, HgZnSeTe, HgZnSTe, and a combination thereof,
the Group III-V compound comprises at least one selected from the group consisting of GaN, GaP, GaAs, GaSb, AIN, AIP, AlAs, AlSb, InN, InP, InAs, InSb, GaNP, GaNAs, GaNSb, GaPAs, GaPSb, AINP, AINAs, AINSb, AlPAs, AlPSb, InNP, InNAs, InNSb, InPAs, InPSb, GaAINP, GaAINAs, GaAINSb, GaAlPAs, GaAlPSb, GaInNP, GaInNAs, GaInNSb, GaInPAs,GaInPSb, InAINP, InAINAs, InAINSb, InAIPAs, InAIPSb, and a combination thereof, and
the Group IV-VI compound comprises at least one selected from the group consisting of SnS, SnSe, SnTe, PbS, PbSe, PbTe, SnPbSSe, SnPbSeTe, SnPbSTe, and a combination thereof.

3. The nanocrystal particle of Claim 1 or 2, wherein the nanocrystal particle comprises a core comprising a first nanocrystal and a shell surrounding the core and comprising a crystalline or amorphous material, and at least one of the boron and the fluorine is present as being doped in the core, the shell, or the both.

4. The nanocrystal particle of Claim 3, wherein the first nanocrystal comprises a Group II-VI compound, a Group III-V compound, a Group IV-VI compound or a combination thereof.

5. The nanocrystal particle of Claim 3 or 4,
wherein the shell has a composition which is the same as or different than that of the first nanocrystal,
wherein the shell comprises a Group II-VI compound, a Group III-V compound, a Group IV-VI compound, a metal fluoride, a metal oxide, or a combination thereof, and
wherein the shell has a bandgap which is greater than a band gap of the first nanocrystal.

6. The nanocrystal particle of any of Claims 3-5, wherein the boron is included in the core, an interface between the core and the shell, the shell, or combination thereof.

7. The nanocrystal particle of Claim 6,
wherein the shell is a multi-layered shell having at least two layers,
wherein each of the layers is the same or different, and
wherein the boron is included in an inner layer of the shell, an outer layer of the shell, or a combination thereof.

8. The nanocrystal particle of any of Claims 3-7, wherein the fluorine is included in the core, an interface between the core and the shell, the shell, or a combination thereof.

9. The nanocrystal particle of Claim 8, wherein the boron and the fluorine are present in a same region or in different regions of the nanocrystal particle.

10. The nanocrystal particle of Claim 8 or 9,
wherein the shell is a multi-layered shell having at least two layers,
wherein each of the layers is the same or different, and
wherein the fluorine is included in an inner layer of the shell, an outer layer of the shell, or a combination thereof, and
wherein the fluorine and the boron are present in a same layer or in different layers from each other.

11. A process of synthesizing a nanocrystal particle of Claim 1, the process comprising:
obtaining a first mixture including a first precursor, a ligand compound, and a solvent;
optionally heating the first mixture;
adding a boron source, a second precursor, optionally a first nanocrystal, and a fluorine source to the optionally heated first mixture to obtain a second mixture; and
heating the second mixture to a reaction temperature to form a reaction product of the first precursor and the second precursor, wherein the reaction product is a nanocrystal particle comprising a semiconductor material, boron, and fluorine.

12. The process of synthesizing a nanocrystal particle of Claim 11,
wherein the first precursor comprises a Group II metal, a Group III metal, a Group IV metal, or a combination thereof, and wherein the first precursor is in a form of an elemental metal, an alkylated metal compound, a metal alkoxide, a metal carboxylate, a metal nitrate, a metal perchlorate, a metal sulfate, a metal acetylacetonate, a metal halide, a metal cyanide, a metal hydroxide, a metal oxide, a metal peroxide, or a combination thereof, and
wherein the second precursor comprises a Group V element, a compound comprising a Group V element, a Group VI element, a compound comprising a Group VI element, or a combination thereof.

13. The process of synthesizing a nanocrystal particle of Claim 15, wherein the boron source comprises a complex of borane and a substance having a lone pair of electrons, wherein the compound having a lone pair of electrons optionally comprises a C1 to C16 amine, a C2 to C16 ether, a C3 to C16 carbonyl containing compound, tetrahydrofuran, a C2 to C16 alkyl sulfide, an a C7 to C20 arylmethyl sulfide, an C3 to C30 allylmethyl sulfide, tetrahydrothiophene, pyridine, PF₃, H⁻, or a combination thereof.

14. The process of synthesizing a nanocrystal particle of Claim 11 or 12, wherein the boron source and the fluorine source comprise a single compound comprising boron and fluorine, wherein the single compound comprising boron and fluorine optionally comprises BF₃, HBF₄, NaBF₄, NH₄BF₄, alkylammonium tetrafluoroborate, an ionic liquid, or a combination thereof.

15. A device comprising a nanocrystal particle of any of Claims 1-10, wherein the device optionally is a light emitting diode, an organic light emitting diode, a sensor, a solar cell electronic device, or a liquid crystal display.

## Patentansprüche

1. Nanokristallpartikel, umfassend:
ein Halbleitermaterial;
Bor und Fluor, wobei der Partikel einen an eine Oberfläche davon gebundenen organischen Liganden aufweist, das Bor als im Partikel dotiert oder als ein Metallborid vorhanden ist und das Fluor als im Partikel dotiert oder als ein Metallfluorid vorhanden ist, wobei das Halbleitermaterial eine Verbindung der Gruppe II-VI, eine Verbindung der Gruppe III-V, eine Verbindung der Gruppe IV-VI oder eine Kombination daraus umfasst,
wobei die Verbindung der Gruppe II-VI ein Metall der Gruppe II, ausgewählt aus der Gruppe, bestehend aus Zn, Hg und Mg, und ein Element der Gruppe VI umfasst und wobei die Verbindung der Gruppe III-V ein Metall der Gruppe III, ausgewählt aus der Gruppe, bestehend aus Al, In, Ga und TI und ein Element der Gruppe V umfasst und wobei die Verbindung der Gruppe IV-VI ein Element der Gruppe IV, ausgewählt aus der Gruppe, bestehend aus Si, Ge und Sn, und ein Element der Gruppe VI umfasst, und
wobei der Nanokristallpartikel kein Cadmium enthält.

2. Nanokristallpartikel nach Anspruch 1, wobei die Verbindung der Gruppe II-VI mindestens eines, ausgewählt aus der Gruppe, bestehend aus ZnS, ZnSe, ZnTe, ZnO, HgS, HgSe, HgTe, MgSe, MgS, ZnSeS, ZnSeTe, ZnSTe, HgSeS, HgSeTe, HgSTe, HgZnS, HgZnSe, HgZnTe, MgZnSe, MgZnS, HgZnTeS, HgZnSeS, HgZnSeTe, HgZnSTe und eine Kombination daraus, umfasst,
die Verbindung der Gruppe III-V mindestens eines, ausgewählt aus der Gruppe, bestehend aus GaN, GaP, GaAs, GaSb, AlN, AlP, AlAs, AlSb, InN, InP, InAs, InSb, GaNP, GaNAs, GaNSb, GaPAs, GaPSb, AlNP, AlNAs, AlNSb, AlPAs, AlPSb, InNP,
InNAs, InNSb, InP As, InPSb, GaAlNP, GaAlNAs, GaAlNSb, GaAlPAs, GaAlPSb, GaInNP, GaInNAs, GaInNSb, GalnPAs, GaInPSb, InAlNP, InAlNAs, InAlNSb, InAlPAs, InAlPSb, und eine Kombination daraus umfasst und
die Verbindung der Gruppe IV-VI mindestens eines, ausgewählt aus der Gruppe, bestehend aus SnS, SnSe, SnTe, PbS, PbSe, PbTe, SnPbSSe, SnPbSeTe, SnPbSTe, und einer Kombination daraus, umfasst.

3. Nanokristallpartikel nach Anspruch 1 oder 2, wobei der Nanokristallpartikel einen Kern, umfassend ein erstes Nanokristall, und eine den Kern umgebende Hülle, umfassend ein kristallines oder amorphes Material, umfasst und mindestens eines aus Bor und Fluor als im Kern, der Hülle oder in beidem dotiert vorhanden ist.

4. Nanokristallpartikel nach Anspruch 3, wobei das erste Nanokristall eine Verbindung der Gruppe II-VI, eine Verbindung der Gruppe III-V, eine Verbindung der Gruppe IV-VI oder eine Kombination daraus umfasst.

5. Nanokristallpartikel nach Anspruch 3 oder 4,
wobei die Hülle eine Zusammensetzung aufweist, die mit der des ersten Nanokristalls übereinstimmt oder sich davon unterscheidet,
wobei die Hülle eine Verbindung der Gruppe II-VI, eine Verbindung der Gruppe III-V, eine Verbindung der Gruppe IV-VI, ein Metallfluorid, ein Metalloxid oder eine Kombination daraus umfasst, und
wobei die Hülle eine Bandlücke aufweist, die größer als eine Bandlücke des ersten Nanokristalls ist.

6. Nanokristallpartikel nach einem der Ansprüche 3 bis 5, wobei das Bor im Kern, einer Schnittfläche zwischen dem Kern und der Hülle, der Hülle oder einer Kombination daraus enthalten ist.

7. Nanokristallpartikel nach Anspruch 6,
wobei die Hülle eine mehrschichtige Hülle mit mindestens zwei Schichten ist, wobei jede der Schichten identisch oder unterschiedlich ist, und wobei das Bor in einer Innenschicht der Hülle, einer Außenschicht der Hülle oder einer Kombination daraus enthalten ist.

8. Nanokristallpartikel nach einem der Ansprüche 3 bis 7, wobei das Fluor im Kern, einer Schnittfläche zwischen dem Kern und der Hülle, der Hülle oder einer Kombination daraus enthalten ist.

9. Nanokristallpartikel nach Anspruch 8, wobei das Bor und das Fluor in einer identischen Region oder in unterschiedlichen Regionen des Nanokristallpartikels vorhanden ist.

10. Nanokristallpartikel nach Anspruch 8 oder 9,
wobei die Hülle eine mehrschichtige Hülle mit mindestens zwei Schichten ist, wobei jede der Schichten identisch oder unterschiedlich ist, und wobei das Fluor in einer Innenschicht der Hülle, einer Außenschicht der Hülle oder einer Kombination daraus enthalten ist; und
wobei das Fluor und das Bor in einer identischen oder in unterschiedlichen Schichten voneinander vorhanden sind.

11. Prozess zum Synthetisieren eines Nanokristallartikels nach Anspruch 1, wobei der Prozess umfasst:
Erhalten einer ersten Mischung, enthaltend einen ersten Vorläufer, eine Ligandenverbindung und ein Lösemittel;
optional Erwärmen der ersten Mischung;
Hinzufügen einer Borquelle, eines zweiten Vorläufers, optional eines ersten Nanokristalls und einer Fluorquelle zur optional erwärmten ersten Mischung, um eine zweite Mischung zu erhalten; und
Erwärmen der zweiten Mischung auf eine Reaktionstemperatur, um ein Reaktionsprodukt des ersten Vorläufers und des zweiten Vorläufers zu bilden, wobei das Reaktionsprodukt ein Nanokristallpartikel, umfassend ein Halbleitermaterial, Bor und Fluor, ist.

12. Prozess zum Synthetisieren eines Nanokristallpartikels nach Anspruch 11,
wobei der erste Vorläufer ein Metall der Gruppe II, ein Metall der Gruppe III, ein
Metall der Gruppe IV oder eine Kombination daraus umfasst, und wobei der erste Vorläufer in Form eines elementaren Metalls, einer alkylierten Metallverbindung, eines Metallalkoxids, eines Metallcarboxylats, eines Metallnitrats, eines Metallperchlorats, eines Metallsulfats, eines Metallacetylacetonat, eines Metallhalids, eines Metallcyanids, eines Metallhydroxids, eines Metalloxids, eines Metallperoxids oder einer Kombination daraus ist, und
wobei der zweite Vorläufer ein Element der Gruppe V, eine Verbindung, umfassend ein Element der Gruppe V, ein Element der Gruppe VI, eine Verbindung, umfassend ein Element der Gruppe VI, oder eine Kombination daraus umfasst.

13. Prozess zum Synthetisieren eines Nanokristallpartikels nach Anspruch 15, wobei die Borquelle einen Komplex aus Boran und einer Substanz mit einem einzigen Elektronenpaar umfasst, wobei die Verbindung mit einem einzigen Elektronenpaar optional eine ein C1- bis C16-Amin, einen C2- bis C16-Ether, ein C3- bis C16-Carbonyl enthaltende Verbindung, Tetrahydrofuran, ein C2- bis C16-Alkylsulfid und ein C7- bis C20-Arylmethylsulfid, ein C3- bis C30-Allylmethylsulfid, Tetrahydrothiophen, Pyridin, PF₃, H⁻ oder eine Kombination daraus umfasst.

14. Prozess zum Synthetisieren eines Nanokristallpartikels nach Anspruch 11 oder 12, wobei die Borquelle und die Fluorquelle eine einzelne Verbindung, umfassend Bor und Fluor, umfasst und wobei die einzelne, Bor und Fluor umfassende Verbindung optional BF₃, HBF₄, NaBF₄, NH₄BF₄, Alkylammoniumtetrafluoroborat, eine ionische Flüssigkeit oder eine Kombination daraus umfasst.

15. Vorrichtung, umfassend einen Nanokristallpartikel nach einem der Ansprüche 1 bis 10, wobei die Vorrichtung optional eine lichtemittierende Diode, eine organische lichtemittierende Diode, ein Sensor, eine elektronische Solarzellenvorrichtung oder eine Flüssigkristallanzeige ist.

## Revendications

1. Particule de nanocristal comprenant : un matériau semiconducteur ;
du bore et du fluor, dans lequel la particule a un ligand organique lié à une surface de celui-ci, le bore est présent sous forme dopée dans la particule ou sous forme de borure métallique et le fluor est présent sous forme dopée dans la particule ou sous forme de fluorure métallique, dans lequel le matériau semiconducteur comprend un composé du groupe II-VI, un composé du groupe III-V, un composé du groupe IV-VI, ou une combinaison de ceux-ci,
dans laquelle le composé du groupe II-VI comprend un métal du groupe II sélectionné dans le groupe constitué de Zn, Hg, et Mg et un élément du groupe VI, et dans lequel le composé du groupe III-V comprend un métal du groupe III sélectionné dans le groupe constitué de Al, In, Ga, et T1 et un élément du groupe V, et dans lequel le composé du groupe IV-VI comprend un élément du groupe IV sélectionné dans le groupe constitué de Si, Ge, et Sn, et un élément du groupe VI, et
dans lequel la particule nanocristal n'inclut pas de cadmium.

2. Particule de nanocristal selon la revendication 1, dans lequel le composé du groupe II-VI comprend au moins l'un sélectionné dans le groupe constitué de ZnS, ZnSe, ZnTe, ZnO, HgS, HgSe, HgTe, MgSe, MgS, ZnSeS, ZnSeTe, ZnSTe, HgSeS, HgSeTe, HgSTe, HgZnS, HgZnSe, HgZnTe, MgZnSe, MgZnS, HgZnTeS, HgZnSeS, HgZnSeTe, HgZnSTe, et une combinaison de ceux-ci,
le composé du groupe III-V comprend au moins l'un sélectionné dans le groupe constitué de GaN, GaP, GaAs, GaSb, AlN, AlP, AlAs, AlSb, InN, InP, InAs, InSb, GaNP, GaNAs, GaNSb, GaPAs, GaPSb, AlNP, AlN As, AlNSb, AlPAs, AlPSb, InNP,
InNAs, InNSb, InPAs, InPSb, GaAlNP, GaAINAs, GaAlNSb, GaAlPAs, GaAlPSb, GaInNP, GaInNAs, GaInNSb, GaInPAs, GaInPSb, InAlNP, InAlNAs, InAlNSb, InAlPAs, InAlPSb, et une combinaison de ceux-ci, et
le composé du groupe IV-VI comprend au moins l'un sélectionné dans le groupe constitué de SnS, SnSe, SnTe, PbS, PbSe, PbTe, SnPbSSe, SnPbSeTe, SnPbSTe, et une combinaison de ceux-ci.

3. Particule de nanocristal selon la revendication 1 ou 2, dans laquelle la particule de nanocristal comprend un noyau comprenant un premier nanocristal et une coque entourant le noyau et comprenant un matériau cristallin ou amorphe, et au moins l'un du bore et du fluor est présent sous forme dopée dans le noyau, la coque, ou les deux.

4. Particule de nanocristal selon la revendication 3, dans laquelle le premier nanocristal comprend un composé du groupe II-VI, un composé du groupe III-V, un composé du groupe IV-VI ou une combinaison de ceux-ci.

5. Particule de nanocristal selon la revendication 3 ou la revendication 4,
dans laquelle la coque a une composition qui est identique à ou différente de celle du premier nanocristal,
dans laquelle la coque comprend un composé du groupe II-VI, un composé du groupe III-V, un composé du groupe IV-VI, un fluorure métallique, un oxyde métallique, ou une combinaison de ceux-ci, et
dans laquelle la coque a une bande interdite qui est supérieure à une bande interdite du premier nanocristal.

6. Particule de nanocristal selon l'une quelconque des revendications 3 à 5, dans laquelle le bore est inclus dans le noyau, une interface entre le noyau et la coque, la coque, ou une combinaison de ceux-ci.

7. Particule de nanocristal selon la revendication 6,
dans laquelle la coque est une coque multi-couches ayant au moins deux couches, dans laquelle chacune des couches est identique ou différente, et dans laquelle le bore est inclus dans une couche interne de la coque, une couche externe de la coque ou une combinaison de ceux-ci.

8. Particule de nanocristal selon l'une quelconque des revendications 3 à 7, dans laquelle le fluor est inclus dans le noyau, une interface entre le noyau et la coque, la coque, ou une combinaison de ceux-ci.

9. Particule de nanocristal selon la revendication 8, dans laquelle le bore et le fluor sont présents dans une zone identique ou dans des zones différentes de la particule de nanocristal.

10. Particule de nanocristal selon la revendication 8 ou 9,
dans laquelle la coque est une coque multi-couches ayant au moins deux couches, dans laquelle chacune des couches est identique ou différente, et dans laquelle le fluor est inclus dans une couche interne de la coque, une couche externe de la coque ou une combinaison de ceux-ci, et
dans laquelle le fluor et le bore sont présents dans une couche identique ou dans des couches différentes les unes des autres.

11. Procédé de synthèse d'une particule de nanocristal selon la revendication 1, le procédé comprenant :
l'obtention d'un premier mélange incluant un premier précurseur, un composé de ligand, et un solvant ;
en option la chauffe du premier mélange ;
l'ajout d'une source de bore, d'un deuxième précurseur, en option d'un premier nanocristal, et d'une source de fluor au premier mélange chauffé en option pour obtenir un deuxième mélange ; et
la chauffe du deuxième mélange à une température de réaction pour former un produit de réaction du premier précurseur et du deuxième précurseur, dans lequel le produit de réaction est une particule de nanocristal comprenant un matériau semiconducteur, du bore, et du fluor.

12. Procédé de synthèse d'une particule de nanocristal selon la revendication 11,
dans lequel le premier précurseur comprend un métal du groupe II, un métal du groupe III,
un métal du groupe IV, ou une combinaison de ceux-ci, et dans lequel le premier précurseur est sous une forme d'un métal élémentaire, un composé de métal alkylé, un alkoxide de métal, un carboxylate de métal, un nitrate de métal, un perchlorate de métal, un sulfate de métal, un acétylacétonate de métal, un halogénure de métal, un cyanure de métal, un hydroxyde de métal, un oxyde de métal, un peroxyde de métal, ou une combinaison de ceux-ci, et
dans lequel le deuxième précurseur comprend un élément du groupe V, un composé comprenant un élément du groupe V, un élément du groupe VI, un composé comprenant un élément du groupe VI, ou une combinaison de ceux-ci.

13. Procédé de synthèse d'une particule de nanocristal selon la revendication 15, dans lequel la source de bore comprend un complexe de borane et une substance ayant un doublet non liant d'électrons,
dans lequel le composé ayant un doublet non liant d'électrons comprend en option une amine C1 à C16, un éther C2 à C16, un composé contenant du carbonyle C3 à C16, un tétrahydrofurane, un sulfure d'alkyle C2 à C16, un sulfure d'arylméthyle C7 à C20, un sulfure d'allylméthyle C3 à C30, un tétrahydrothiophène, une pyridine, PF₃, H⁻, ou une combinaison de ceux-ci.

14. Procédé de synthèse d'une particule de nanocristal selon la revendication 11 ou 12, dans lequel la source de bore et la source de fluor comprennent une composé unique comprenant du bore et du fluor, dans lequel le composé unique comprenant du bore et du fluor comprend en option du BF₃, HBF₄, NaBF₄, NH₄BF₄, un tétrafluoroborate alkylammonium, un liquide ionique, ou une combinaison de ceux-ci.

15. Dispositif comprenant une particule de nanocristal selon l'une quelconque des revendications 1 à 10, dans lequel le dispositif est en option une diode électroluminescente, une diode électroluminescente organique, un capteur, un dispositif électronique de cellule solaire ou un afficheur à cristaux liquides.
